# EUROPEAN PATENT SPECIFICATION

(11) **EP 0 487 145 B1**
(45) Date of publication and mention of the grant of the patent: **12.10.1994**
(21) Application number: 91202967.5
(22) Date of filing: 14.11.1991
(51) Int. Cl.: B60P 3/075, B66F 7/28

(54) **Device for blocking wheel-mounted loads, in particular for lifting platforms**
Blockiervorrichtung für Last mit Rädern, insbesondere für Hebebühne
Dispositif pour bloquer des charges montées sur roues, en particulier pour plate-formes

(30) Priority: 20.11.1990 IT 2210890
(43) Date of publication of application: 27.05.1992
(73) Proprietor: CAMPISA S.r.l., I-20032 Ospitaletto di Cormano (MI) (IT)
(72) Inventor: Giampaolo, Nelzi, I-22070 Appiano Gentile (Como) (IT)
(74) Representative: Henke, Erwin

(56) References cited:
- FR-A- 2 372 104
- GB-A- 2 080 762
- US-A- 3 870 126

## Description

This invention relates to a device for blocking wheel-mounted loads, in particular for lifting platforms.

Particular care must always be taken in loading wheel-mounted loads onto transportation vehicles provided with lifting platforms.

Lifting platforms are currently provided with rotatable plates oer flanges, which besides being intrinsically dangerous because of their blade configuration considerably complicate the loading operation by requiring a wheel-mounted load to be securely held while simultaneously tilting it, and with the further complication that this operation is generally carried out with the lifting platform inclined so that it touches the ground.

From FR-A-2 372 104 a blocking device for wheel-mounted loads, in particular for lifting platforms is already known, which device presents the features indicated in the preamble of claim 1. In this known device the rotatable section bar portion is linked to a rotatable shackle which determines the raised position of the rotatable section bar portion holding it in this position.

The object of the present invention is to improve and simplify the said known art by providing a blocking device for wheel-mounted loads which enables both the loads and the blocking device to be easily manoeuvred.

This object is attained by a blocking device for wheel-mounted loads according to the characterising part of claim 1.

Advantageously, according to the invention the section bar portions have an essentially C-shaped hollow cross-section defining on one side a first seat for housing and guiding said means for selecting the locked or released state and on the other side a second seat for housing said elastic means and hinge means to enable the rotatable section bar portion to be rotated.

The elastic means preferably consist of a torsion spring arranged to constantly urge the rotatably movable section bar portion out of the seat provided in the lifting platform.

Again preferably according to the invention, the means for selecting the locked or released state of the rotatable secton bar portion consist of a latch fixed to a rod slidable within a guide element, between the latch and guide elements there being provided a sleeve for locking/releasing the travel of said rod and a spring coaxial to this latter; the sleeve, the spring, the rod and its guide element being housed in one of the fixed lateral section bar portions, the latch being able to engage the rotatably movable central portion.

In one embodiment of this invention the sleeve is provided with a two-position selector projecting from the loading surface and able to lock the latch within the fixed lateral section bar portion, or enable it to engage said rotatably movable central section bar portion.

External to the seat for housing the means for selecting the locked or released state, the section bar surface comprises a portion with a radius of curvature equal to the distance between the centre of rotation and the surface itself.

The technical characteristics of the present invention will be more apparent from the detailed description given hereinafter by way of non-limiting example with reference to the accompanying drawings, in which:
Figure 1 is a top plan view of a device according to the invention;
Figure 2 is a section on the line II-II of Figure 1 showing a rotatable section bar element in a first operating position;
Figure 3 is a section on the line II-II of Figure 1 relative to a another position of the element of Figure 2;
Figure 4 is a section on the line IV-IV of Figure 1 showing another part of the device of the invention in a first operating position; and
Figure 5 is a section on the line IV-IV of Figure 1 relative to another operating position of the part shown in Figure 4.

In the figures the reference numeral 11 indicates overall a device for blocking wheel-mounted loads on a lifting platform 12. A seat 13 housing the device of the invention is provided in the lifting platform. The device 11 is composed essentially of a central section bar portion 14, occupying most of the width of the lifting platform 12.

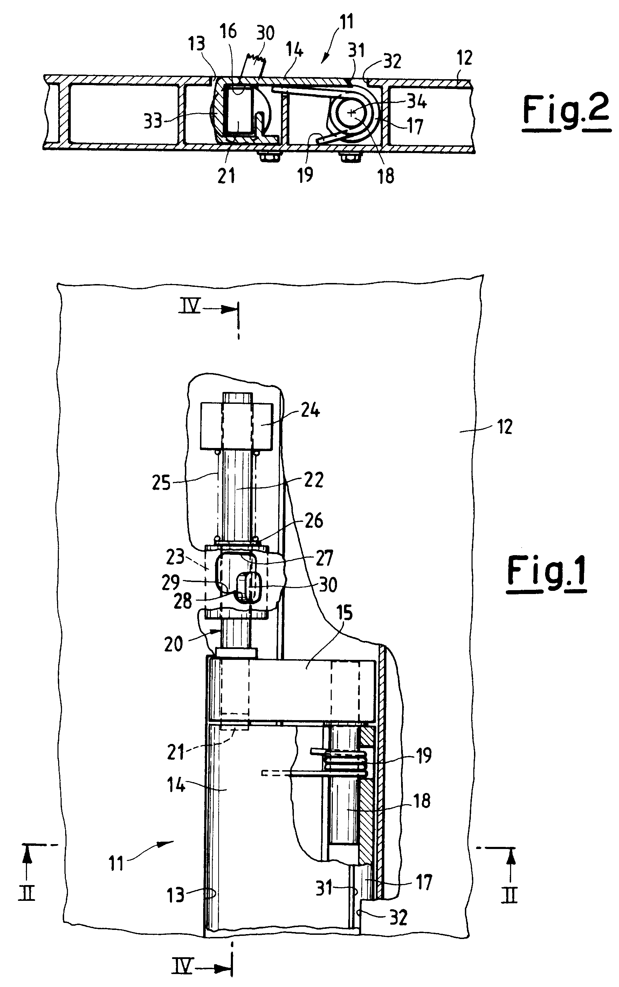

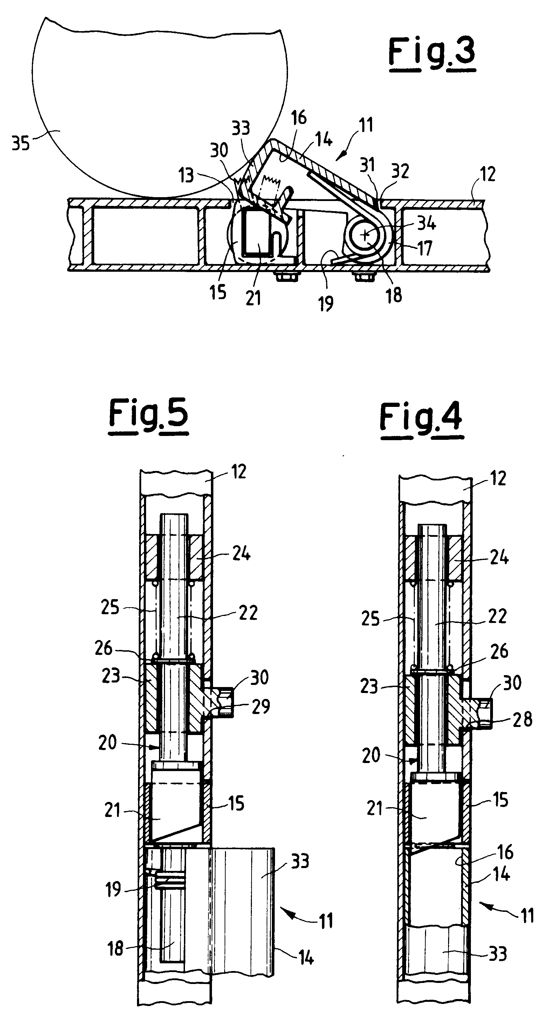

Adjacent to the section bar portion 14 there are two lateral section bar portions 15, to which the portion 14 is rotatably connected in such a manner as to define a position within the seat 16 (Figures 2 and 4) and a raised position (Figures 3 and 5).

The section bar portions 14 and 15 have an essentially C-shaped hollow cross-section defining on one side a first seat 16 of substantially square profile and on the other side a second seat 17 of substantially circular profile housing pins 18 which enable the central section bar portion 14 to rotate relative to the lateral portions 15.

The central section bar portion 14 is constantly urged out of the seat 13 by a spring 19 which in a preferred embodiment of the present invention is a torsion spring engaged with the seat 13 and with the inner surface of said central section bar portion 14.

In the first seat 16 in one of the section bar portions 15 there is provided a mechanism, indicated overall by 20, for locking and releasing the central section bar portion 14.

The mechanism 20, most of which is housed in one of the lateral portions 15, engages the central section bar portion 14. The mechanism 20 consists of a latch 21 fixed to a rod 22 slidable within a sleeve 23 and a guide element 24. Between the sleeve 23 and guide element 24 there is a spring 25 which acts at one end against the guide element 24 and at the other end against a ring 26. The ring 26 is rigid with the rod 22 and is in contact with the sleeve 23 only when in the position shown in Figure 5, whereas when in the position shown in Figure 4 it does not force against the sleeve 23 although it may come into contact with it. Above the sleeve 23 there is provided in the surface of the lifting platform 12 a slot 27 defining a housing with two engagement positions 28 and 29 for a selector 30 connected to the rod 22.

In a preferred embodiment of the present invention at least the central section bar portion 14 comprises on that side of its rear surface close to the pins 18 a first abutment tooth 31 which acts against an edge portion 32 of the seat 13.

That outer surface 33 of the central section bar portion 14 defining a wall of the seat 16 of square cross-section has for example a curvature with a radius equal to the distance between it and the centre of rotation defined in practice by the geometrical centre of the pin 18.

In this manner the central section bar portion 14 is retained in position within the seat 13 by the lateral section bar portions 15, to which it is rotatably connected by the pins 18.

When the mechanism 20 is not acting, the spring 19 tends to maintain the central section bar portion 14 raised from the seat 13.

As can be seen in Figure 3, a wheel indicated schematically by 35 will be prevented from rotating by the central section bar portion 14, which acts on it via the surface 33.

Operating the mechanism 20, by moving the selector 30, causes the latch 21 to engage or disengage the central section bar portion 14.

The rod 22, which holds the latch 21, is constantly urged towards the central section bar portion 14 by the spring 25, so that if the selector 30 is in the position indicated by 28 (shown in Figure 1), the latch 21, which has its bevelled face pointing upwards, allows the central section bar portion 14 to descend into the seat 13 and remain locked therein once engaged by it.

On moving the selector 30 to the position indicated by 29, notwithstanding the action of the spring 25 and movable ring 26, the latch 21 remains completely contained within the lateral section bar portion 15 in which the entire mechanism 20 is housed.

The selector 30, which projects only slightly from the lifting platform, can be operated by simply pressing for example with one foot, to lock or release the rotational movement of the central section bar portion 14.

It will be apparent that a device of this type advantageously applied for example to the lifting platform of any heavy means of transport allows wheel-mounted loads to be comfortably loaded onto it.

Such lifting platforms are generally required to lie inclined to the ground (the road surface) to allow said wheel-mounted loads to be positioned on them. These loads therefore have to be retained on the platform under total safety conditions, with no possibility of their moving either forwards or backwards.

This can be achieved by installing on each platform two blocking and unblocking devices of the present invention in opposing arrangements so that the central section bar portions can rise from their respective seats in opposite directions.

## Claims

1. A blocking device (11) for wheel-mounted loads, in which on a lifting platform (12) defining a loading surface there is provided at least one seat (13) able to house portions (14,15) of a section bar, at least one portion (14) of said section bar being rotatably movable between a position within said seat (13) and flush with said loading surface, and a position raised from said loading surface, there being provided elastic means (19) for raising said rotatable section bar portion (14) and means (30) for selecting the locked or released state of this latter, characterised in that said rotatable section bar portion (14) is rotatably engaged with section bar portions (15) provided laterally adjacent to it so as to define two fixed lateral portions (15) of small dimensions and said rotatable central portion (14) occupying most of the width of said loading surface, and that at least said rotatable section bar portion (14) has its outer rear surface provided with a profiled abutment tooth (31) arranged to engage an edge portion (32) of the seat (13), when the rotatable section bar portion (14) is in its raised position.

2. A device as claimed in claim 1, characterised in that said section bar portions (14,15) have an essentially C-shaped hollow cross-section defining on one side a first seat (16) for housing and guiding said means (23,28,29,30) for selecting the locked or released state and on the other side a second seat (17) for housing said elastic means (19) and hinge means (18) to enable the rotatable section bar portion (14) to be rotated.

3. A device as claimed in claim 1, characterised in that said elastic means consist of a torsion spring (19) arranged to constantly urge said rotatably movable section bar portion (14) out of said seat (13) provided in the lifting platform (12).

4. A device as claimed in claim 1, characterised in that said means (30) for selecting the locked or released state of said rotatable section bar portion (14) consist of a latch (21) fixed to a rod (22), slidable within a guide element (24), between said latch (21) and said guide element (24) there being provided a sleeve (23) for locking/releasing the travel of said rod (22) and a spring (25) coaxial to this latter; said sleeve (23), said spring (25), said rod (22) and its guide element (24) being housed in one of said fixed lateral section bar portions (15), said latch (21) being able to engage said rotatably movable central portion (14).

5. A device as claimed in claim 4, characterised in that said sleeve (23) is provided with a two-position selector (30) projecting from said loading surface and able to lock said latch (21) within the fixed lateral section bar portion (15), or enable it to engage said rotatably movable central section bar portion (14).

6. A device as claimed in claim 2, characterised in that external to said seat (14) for housing the means (30) for selecting the locked or released state, the surface (33) of said section bar (14) comprises a portion with a radius of curvature equal to the distance between the centre of rotation (34) and the surface (33) itself.

## Patentansprüche

1. Blockiervorrichtung (11) für Ladungen auf Rädern, bei der an einer Hubplattform (12), die eine Ladefläche bildet, wenigstens ein Hohlraum (13) vorgesehen ist, der Teile (14, 15) einer Profilstange aufnimmt, von denen wenigstens ein Teil (14) dieser Profilstange zwischen einer Stellung innerhalb des Hohlraums (13), in der er mit der Ladefläche bündig ist, und einer Stellung verschwenkbar ist, die gegenüber der Ladefläche erhöht ist, wobei ein elastisches Teil (19) zum Anheben des verschwenkbaren Teils (14) der Profilstange vorgesehen ist, sowie eine Vorrichtung (30) zum Auswählen des verriegelten und des gelösten Zustandes des Stangenteils, **dadurch gekennzeichnet**, daß der verschwenkbare Teil (14) der Profilstange verschwenkbar an Teilen (15) der Profilstange angelenkt ist, die seitlich von ihm so angeordnet sind, daß sie zwei feste Seitenteile (15) geringer Abmessung bilden, wobei der verschwenkbare Mittelteil (14) den größten Teil der Breite der Ladefläche einnimmt, und daß wenigstens der verschwenkbare Teil (14) der Profilstange an seiner rückwärtigen Außenfläche mit einem profilierten Anschlagzahn (31) versehen ist, der so angeordnet ist, daß er mit einer Kante (32) des Hohlraums (13) dann in Eingriff kommen kann, wenn der verschwenkbare Teil (14) der Profilstange in seiner angehobenen Stellung ist.

2. Blockiervorrichtung nach Anspruch 1, **dadurch gekennzeichnet**, daß die Teile (14, 15) der Profilstange einen im wesentlichen C-förmigen, hohlen Querschnitt haben, der an einer Seite einen ersten Sitz (16) zum Aufnehmen und Führen der Vorrichtung (23, 28, 29, 30) zum Auswählen des verriegelten und gelösten Zustandes hat und an der anderen Seite einen zweiten Sitz (17) zum Aufnehmen des elastischen Teils (19) und einer Gelenkvorrichtung (18), mit deren Hilfe es möglich ist, daß der verschwenkbare Teil (14) der Profilstange verschwenkt werden kann.

3. Blockiervorrichtung nach Anspruch 1, **dadurch gekennzeichnet**, daß das elastische Teil aus einer Torsionsfeder (19) besteht, die so angeordnet ist, daß sie den verschwenkbaren Teil (14) der Profilstange dauernd aus dem Hohlraum (13) herausdrückt, der in der Hubplattform (12) liegt.

4. Blockiervorrichtung nach Anspruch 1, **dadurch gekennzeichnet**, daß die Vorrichtung (30) zum Auswählen des verriegelten und des gelösten Zustandes des Stangenteils (14) aus einem Riegel (21) besteht, der an einer Stange (22) befestigt ist, die ihrerseits innerhalb eines Führungselements (24) verschiebbar ist, wobei zwischen dem Riegel (21) und dem Führungselement (24) zum Verriegeln oder Lösen der Bewegung der Stange (22) eine Hülse (23) und koaxial zu dieser eine Feder (25) vorgesehen sind, wobei die Hülse (23), die Feder (25), die Stange (22) und ihr Führungselement (24) in einem der feststehenden, seitlichen Stangenteile (15) aufgenommen sind und wobei der Riegel (21) mit dem verschwenkbar beweglichen Mittelteil (14) in Eingriff kommen kann.

5. Blockiervorrichtung nach Anspruch 4, **dadurch gekennzeichnet**, daß die Hülse (23) mit einem in zwei Stellungen verbringbaren Auswahlteil (30) versehen ist, das sich von der Ladefläche aus erstreckt und den Riegel (21) innerhalb des festen, seitlichen Stangenteils (15) verriegeln kann, oder der es mit dem verschwenkbar beweglichen Mittelteil (14) in Eingriff bringen kann.

6. Blockiervorrichtung nach Anspruch 2, **dadurch gekennzeichnet**, daß außerhalb des Hohlraums (14) zum Aufnehmen der Vorrichtung (30) zum Auswählen des verriegelten oder gelösten Zustandes die Fläche (33) des Stangenteils (14) einen Abschnitt mit einem Krümmungsradius aufweist, der gleich groß ist wie der Abstand zwischen dem Drehmittelpunkt (34) und der Fläche selbst.

## Revendications

1. Dispositif de blocage (11) pour charges montées sur roues, dans lequel sur une plate-forme de levage (12) définissant une surface de chargement, il est prévu au moins un logement (13) pouvant recevoir des parties (14, 15) d'un profilé en acier, au moins une partie (14) dudit profilé en acier étant mobile de façon rotative entre une position à l'intérieur dudit logement (13) et à niveau avec ladite surface de chargement, et une position surélevée par rapport à ladite surface de chargement, un moyen élastique (19) étant prévu pour soulever ladite partie (14) rotative du profilé en acier et un moyen (30) pour sélectionner l'état bloqué ou dégagé de cette dernière, caractérisé en ce que ladite partie rotative (14) du profilé en acier se met en prise, par rotation, avec les parties (15) du profilé en acier prévues latéralement et adjacente à cette dernière, de manière à définir deux parties latérales fixes (15) de faibles dimensions et ladite partie centrale rotative (14) occupant la plus grande partie de la largeur de ladite surface de chargement, et en ce que au moins ladite partie rotative (14) du profité en acier comporte une surface arrière extérieure pourvue d'une dent profilée (31) formant butée prévue pour se mettre en prise avec une partie de bord (32) du logement (13) lorsque la partie rotative (14) du profité en acier se trouve dans sa position surélevée.

2. Dispositif selon la revendication 1, caractérisé en ce que lesdites parties (14, 15) du profilé en acier présentent une coupe transversale creuse sensiblement en forme de C définissant d'un côté un premier logement (16) pour recevoir et guider lesdits moyens (23, 28, 29, 30) pour sélectionner l'état bloqué ou dégagé et d'un autre côté un deuxième logement (17) pour recevoir ledit moyen élastique (19) et un moyen formant articulation (18) pour permettre la rotation de la partie rotative (14) du profilé en acier.

3. Dispositif selon la revendication 1, caractérisé en ce que ledit moyen élastique se compose d'une barre de torsion (19) prévue pour pousser constamment en force ladite partie (14) du profilé en acier mobile de façon rotative hors dudit logement (13) prévu dans la plateforme de levage (12).

4. Dispositif selon la revendication 1, caractérisé en ce que ledit moyen (30) pour sélectionner l'état bloqué ou dégagé de ladite partie rotative (14) du profilé en acier se compose d'un dispositif de verrouillage (21) fixé à une tige (22) pouvant coulisser à l'intérieur d'un élément de guidage (24), entre ledit dispositif de verrouillage (21) et ledit élément de guidage (24), un manchon (23) étant prévu pour bloquer/dégager la course de ladite tige (22) ainsi qu' un ressort (25) coaxial par rapport à cette dernière; ledit manchon (23), ledit ressort (25), ladite tige (22) et son élément de guidage (24) étant logés dans l'une desdites parties latérales (15) du profilé en acier, ledit dispositif de verrouillage (21) pouvant se mettre en prise avec la partie centrale mobile de façon rotative (14).

5. Dispositif selon la revendication 4, caractérisé en ce que ledit manchon (23) est pourvu d'un sélecteur à deux positions (30) se projetant à partir de ladite surface de chargement et pouvant bloquer ledit dispositif de verrouillage (21) à l'intérieur de la partie (15) fixe latérale du profilé en acier, ou pouvant se mettre en prise avec ladite partie (14) centrale mobile de façon rotative du profilé en acier.

6. Dispositif selon la revendication 2, caractérisé en ce que à l'extérieur dudit logement (14) prévu pour recevoir le moyen (30) pour sélectionner l'état bloqué ou dégagé, la surface (33) dudit profilé en acier (14) comprend une partie dont le rayon de courbure est égal à la distance comprise entre le centre de rotation (34) et la surface (33) elle-même.
